# EUROPÄISCHE PATENTSCHRIFT

(11) **EP 0 879 870 B1**
(45) Veröffentlichungstag und Bekanntmachung des Hinweises auf die Patenterteilung: **29.08.2001**
(21) Anmeldenummer: 98108970.9
(22) Anmeldetag: 16.05.1998
(51) Int. Cl.: C09K 21/14, C09K 3/10

(54) **Intumeszierende Dichtungs- und Abdeckprofile**
Intumescent sealing and cover sections
Profil d'étanchéité et recouvrement intumescent

(30) Priorität: 21.05.1997 AT 85797
(43) Veröffentlichungstag der Anmeldung: 25.11.1998
(73) Patentinhaber: Intumex Brandschutzprodukte AG, 4021 Linz (AT)
(72) Erfinder: Horacek, Heinrich, Dr., 4040 Linz (AT)
(74) Vertreter: Klostermann, Ingrid

(56) Entgegenhaltungen:
- EP-A- 0 302 987
- EP-A- 0 380 088
- EP-A- 0 576 951
- EP-A- 0 605 861
- DE-A- 3 625 080
- DE-A- 4 135 678

## Beschreibung

Die Erfindung betrifft intumeszierende Dichtungs- und Abdeckprofile, hergestellt durch Extrusion, die sowohl als Kaltgas-, als auch als Heißgasdichtung eingesetzt werden können.
Dichtungen wurden bereits aus einer Vielzahl von Materialien hergestellt. So ist es etwa Stand der Technik Dichtungen aus linearen thermoplastischen Polyolefinen, wie etwa aus EP-A1-0714426 oder EP-A1-0714427 bekannt, herzustellen.Weitere Kaltgasdichtungen werden beispielsweise aus PVC, EVA oder aus thermoplastischen Elastomeren durch Extrusion herzustellen. Dabei werden bisher vor allem hochwertige Elastomerprofile in mehreren Arbeitsgängen gefertigt, bei welchen nach dem Formungsprozeß im Extruder die noch plastischen Profile in Vulkanisationsanlagen unter Einwirkung von Druck und Temperatur vernetzt werden. Intumeszierende Dichtungen bzw. Heißgasdichtungen, die Blähgraphit enthalten, sind beispielsweise auf der Basis von Polyolefinen oder Acrylnitrilbutadiencopolymeren bekannt. Diese intumeszierenden Dichtungen werden nach verschiedenen Verfahren, etwa nach Streich- und Trocknungsverfahren, mittels Papiertechnologie oder nach der Kautschukverarbeitungstechnik, hergestellt.
Aufgabe der vorliegenden Erfindung war es, Dichtungen auf Basis von thermoplastischen Elastomeren zu finden, die sowohl als Kaltgas- als auch als Heißgasdichtungen eingesetzt werden können und deren Herstellung durch Extrusion in einem Arbeitsgang erfolgt.
Unerwarteterweise konnte diese Aufgabe durch Extrudate aus einer Mischung aus thermoplastischen Elastomeren, Blähgraphit, Flammhemmern, anorganischen Füllstoffen und anorganischen Fasern gelöst werden.

Gegenstand der vorliegenden Erfindung sind demnach intumeszierende Dichtungs- und Abdeckprofile, erhältlich durch Extrusion einer Mischung aus thermoplastischen Elastomeren, Blähgraphit, Flammhemmer, anorganischen Füllstoffen und anorganischen Fasern bei 180 bis 250°C und anschließender Umformung zu den entsprechenden Profilen.

Die zur Herstellung der erfindungsgemäßen Profile verwendete Mischung enthält dabei 20 bis 80 Gew.%, bevorzugt 40 bis 60 Gew.% an thermoplastischen Elastomeren, 15 bis 35 Gew.%, bevorzugt 20 bis 30 Gew.% an Blähgraphit, 1 bis 10 Gew.%, bevorzugt 2 bis 6 Gew.% an Flammhemmern, 10 bis 50 Gew.%, bevorzugt 12 bis 30 Gew.% an anorganischen Füllstoffen und 2 bis 20 Gew.%, bevorzugt 5 bis 15 Gew.% an anorganischen Fasern.

Geeignete thermoplastische Elastomere sind solche mit Verarbeitungstemperaturen bis zu 250°C.
Beispiele dafür sind thermoplastische Elastomere, die über Salzbildung oder über Domänenbildung vernetzt werden. Es können daher aus der Gruppe der über Salzbildung vernetzenden thermoplastischen Elastomere beispielsweise Ethylen-Methacrylsäurecopolymere (z.B. Surlyn, Fa. Du Pont), Butandienacrylsäurecopolymere, sulfonierte Polybutadiene oder sulfonierte EPDM-Kautschuke (z.B. Hycar, Fa. Du Pont) eingesetzt werden. Geeignete thermoplastische Elastomere die über Domänbildung vernetzen, sind beispielsweise Styrol-Butadien-Styrol-Blockcopolymere (z.B. Kraton D, Fa. Shell Chemical) Styrol-Butadien-Copolymere (z.B. Solpren 400, Fa. Phillips Petroleum), Polyester-Polyether-Copolymere (z.B. Hytrel, Fa. Du Pont), (Gaflex, Fa. BAF) Polypropylen-vernetzter EPDM-Kautschuk-Blockcopolymere (z.B. Santopren, Fa. Monsanto) oder Polyetherpolyamid-Blockcopolymere (z.B. Pebax, Fa. ATOChem)

Als weiteren Hauptbestandteil weisen die Profile 15 bis 35 Gew.% an Blähgraphit auf.
Je nach gewünschtem Einsatzgebiet der Profile und dem damit verbundenen geforderten Eigenschaftsprofil werden die übrigen Bestandteile in den entsprechenden Mengen zu dem thermoplastischen Elastomeren und dem Blähgraphit zugesetzt.
Diese Bestandteile sind Flammhemmer, bevorzugt halogenfreie Flammhemmer, wie etwa Phosphorsäureester, Tripenylphosphat, Resorcindiphenylphosphat u. ä. und anorganische Füllstoffe wie etwa Aluminiumtrihydrat, Gips, Ton, Silikate, Talkum, Kreide, Titandioxyd, Magnesiumcarbonat, Magnesiumhydroxyd, Glimmer, Vermiculit, Quarzmehl, Zinoxyd.

Bevorzugt werden dabei halogenfreie Flammhemmer in einer Menge von 2 bis 6 Gew.% zugesetzt. Besonders bevorzugt werden Phosphorsäureester als Flammhemmer verwendet.
Die anorganischen Füllstoffe werden bevorzugt in einer Menge von 5 bis 15 Gew.% zugesetzt, wobei Aluminiumtrihydrat besonders bevorzugt wird.
Bevorzugt werden anorganische Füllstoffe verwendet bei welchen mindestens 50 Gew.% eine Korngröße von 1 bis 2 µm aufweisen.

Ein weiterer Bestandteil der zur Herstellung der Profile verwendeten Mischung sind anorganische Fasern, die bevorzugt in einer Menge von 5 bis 15 Gew.% zugesetzt werden. Die Fasern können dabei aus Glas, Kalziumphosphat oder Basalt bestehen, wobei Glasfasern bevorzugt sind.
Die Fasern sollten dabei vorzugsweise eine Länge von 2 bis 6 mm aufweisen.

Der Mischung können noch weitere Additive, wie etwa Farbpigmente, z.B. Eisenoxyde oder Chromoxyde in einer Menge von 0,5 bis 3 Gew.% zugegeben werden.
Zur Herstellung der erfindungsgemäßen Profile wird somit zuerst eine Mischung aus den oben genannten Bestandteilen in den gewünschten Mengen hergestellt und diese Mischung sodann mittels geeigneten Extrudern, beispielsweise mittels eines Zweischneckenextruders oder, eines Buss-Kneters extrudiert.

Die einzelnen Bestandteile können dabei auch direkt (ohne vorherigem Mischen) in den Extruder eingebracht werden.
Die Extrusionstemperatur liegt je nach Ausgangselastomeren zwischen 180 - 250°C, bevorzugt zwischen 180 und 210°C.
Die Mischung wird dabei zuerst zu Strängen verarbeitet, die nach erfolgter Extrusion kalt abgeschlagen werden. Die so erhaltenen Zylindergranulate werden anschließend auf einer Spritzgußmaschine zu den entsprechenden Dichtungsprofilen und Abdeckprofilen umgeformt. Bei einer weiteren Herstellungsvariante werden die Stränge direkt kontinuierlich über eine Düse entsprechender Geometrie zu Endlosprofilen extrudiert.

Die erfindungsgemäßen Profile können sowohl als Heißgas- als auch als Kaltgasdichtungen, beispielsweise für Brandschutztüren, Brandschutzfenstern, Brandschutzverglasungen sowie für Fugenabdichtungen, verwendet werden.

Sie zeichnen sich dabei bei Verwendung als Kaltgasdichtung durch ihr gummielastisches Verhalten sowie durch ein gewünschtes Intumeszenzverhalten bei Verwendung als Heißgasdichtung bei gleichzeitg guten mechanischen Eigenschaften aus, da sie im Brandfall nicht wegschmelzen und eine stabile, dichte Kruste bilden.

### Beispiel 1:

Eine Mischung aus 50 Gew.% EVA Levapren 500 HV, 25 Gew.% Blähgraphit, 5 Gew.% Amgard V 490, 5 Gew.% Glasfasern, 15 Gew.% Aluminiumtrihydrat wurde bei 180 bis 210°C auf einem Zweischneckenextruder zu Strängen verarbeitet und kalt abgeschlagen.
Anschließend wurde das so erhaltene Zylindergranulat auf einer Spritzgußmaschine zu Dichtungsprofilen umgeformt.
Ihr intumeszierendes Verhalten wurde mittels thermomechanischer Analyse charakterisiert und die maximale Volumenvergrößerung in % angegeben.
In analoger Weise wurden die Profile in den Beispielen 2- 9 in Tab. 1 hergestellt.

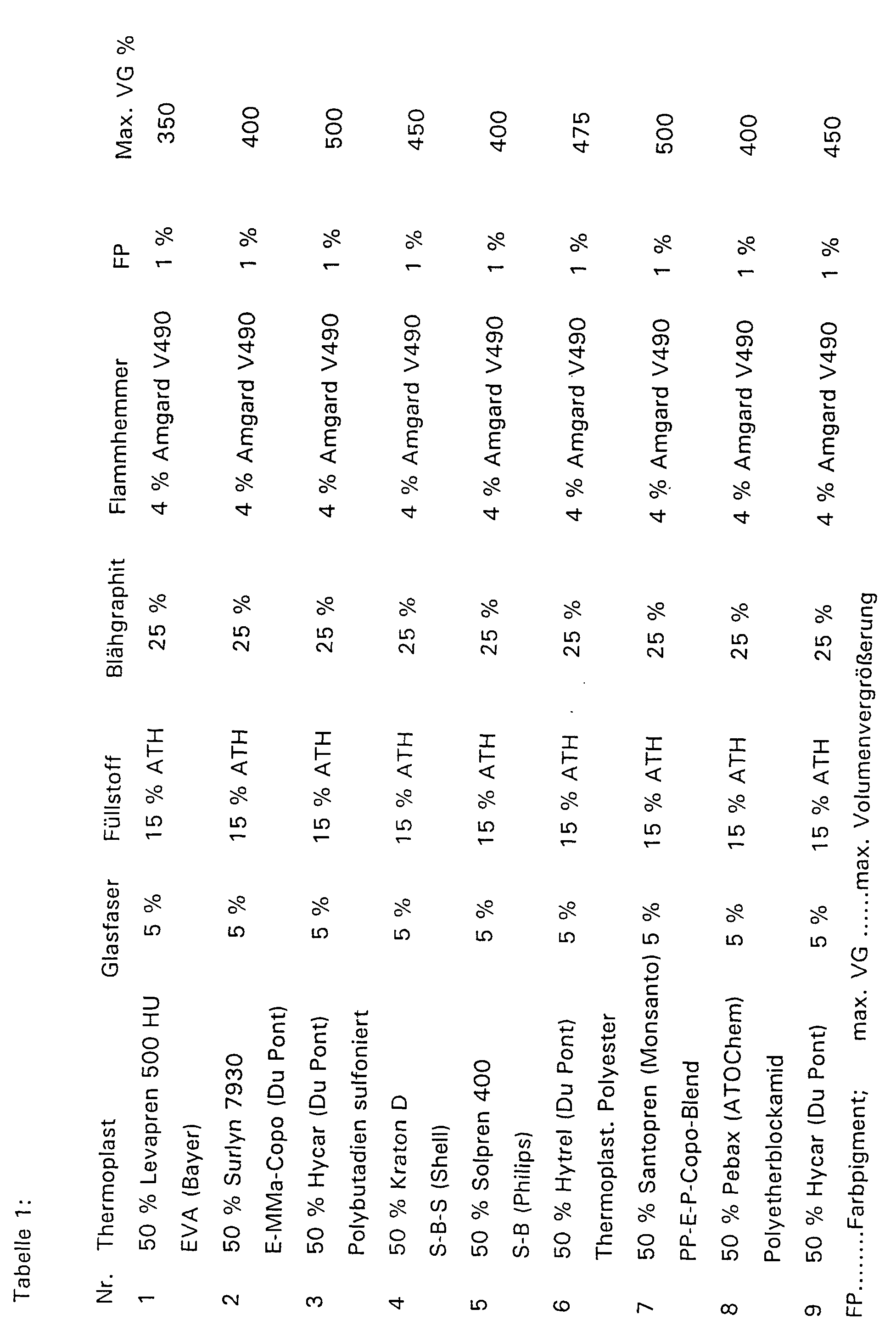

## Patentansprüche

1. Intumeszierende Dichtungs- und Abdeckprofile, erhältlich durch Extrusion einer Mischung bestehend aus 20 bis 80 Gew.% an thermoplastischen Elastomeren, 15 bis 35 Gew.% an Blähgraphit, 1 bis 10 Gew.% an Flammhemmer, 10 bis 50 Gew.% an anorganischen Füllstoffen und 2 bis 20 Gew.% an anorganischen Fasern bei 180 bis 250°C und anschließender Umformung zu den entsprechenden Profilen.

2. Intumeszierende Dichtungs- und Abdeckprofile nach Anspruch 1, **dadurch gekennzeichnet**, daß als thermoplastische Elastomere Ethylen-Methacrylsäurecopolymere, Butadienacrylsäurecopolymere, sulfonierte Polybutadiene oder sulfonierte EPDM-Kautschuke, Styrol-Butadien-Styrol-Blockcopolymere, Styrol-Butadien-Copolymere, Polyester-Polyether-Copolymere, Polypropylen-vernetzter EPDM-Kautschuk-Blockcopolymere oder Polyetherpolyamid-Blockcopolymere eingesetzt werden.

3. Intumeszierende Dichtungs- und Abdeckprofile nach Anspruch 1, **dadurch gekennzeichnet**, daß als Flammhemmer Phosphorsäureester, Triphenylphsophat, Resorcindiphenylphosphat eingesetzt werden.

4. Intumeszierende Dichtungs- und Abdeckprofile nach Anspruch 1, **dadurch gekennzeichnet**, daß als anorganische Füllstoffe Aluminiumtrihydrat, Gips, Ton, Silikate, Talkum, Kreide, Titandixyd, Magnesiumcarbonat, Magnesiumhydroxyd, Glimmer, Vermiculit, Quarzmehl, Zinkoxyd eingesetzt werden.

5. Intumeszierende Dichtungs- und Abdeckprofile nach Anspruch 1, **dadurch gekennzeichnet**, daß als anorganische Fasern Fasem aus Glas, Kalziumphosphat oder Basalt eingesetzt werden.

6. Intumeszierende Dichtungs- und Abdeckprofile nach Anspruch 1, **dadurch gekennzeichnet**, daß die Profile zusätzliche Additive, wie Pigmente enthalten.

7. Verwendung von intumeszierenden Dichtungs- und Abdeckprofilen nach Anspruch 1, sowohl als Kaltgas- als auch als Heißgasdichtungen.

## Claims

1. Intumescent sealing or cover profiles obtainable by extrusion of a mixture comprising from 20 to 80 % by weight of thermoplastic elastomers, from 15 to 35 % by weight of expandable graphite, from 1 to 10 % by weight of flame retardants, from 10 to 50 % by weight of inorganic fillers and from 2 to 20 % by weight of inorganic fibres at from 180 to 250°C and subsequent shaping to form the appropriate profiles.

2. Intumescent sealing or cover profiles according to Claim 1, **characterized in that** the thermoplastic elastomers used are ethylene-methacrylic acid copolymers, butadiene-acrylic acid copolymers, sulphonated polybutadienes or sulphonated EPDM rubbers, styrene-butadiene-styrene block copolymers, styrene-butadiene copolymers, polyester-polyether copolymers, polypropylenecrosslinked EPDM rubber block copolymers or polyether-polyamide block copolymers.

3. Intumescent sealing or cover profiles according to Claim 1, **characterized in that** the flame retardants used are phosphoric esters, triphenyl phosphate or resorcinol diphenyl phosphate.

4. Intumescent sealing or cover profiles according to Claim 1, **characterized in that** the inorganic fillers used are aluminium trihydroxide, gypsum, clay, silicates, talc, chalk, titanium dioxide, magnesium carbonate, magnesium hydroxide, mica, vermiculite, quartz flour or zinc oxide.

5. Intumescent sealing or cover profiles according to Claim 1, **characterized in that** the inorganic fibres used are fibres comprising glass, calcium phosphate or basalt.

6. Intumescent sealing or cover profiles according to Claim 1, **characterized in that** the profiles comprise further additives such as pigments.

7. Use of intumescent sealing or cover profiles according to Claim 1, both as cold gas seals and as hot gas seals.

## Revendications

1. Profilés d'étanchéité et de recouvrement gonflants, obtenus par extrusion d'un mélange comprenant 20 à 80 % en poids d'élastomères thermoplastiques, 15 à 35 % en poids de graphite gonflant, 1 à 10 % en poids d'inhibiteur de flammes, 10 à 50 % en poids de charges minérales et 2 à 20 % en poids de fibres minérales entre 180 et 250°C, puis formage pour obtenir les profilés correspondants.

2. Profilés d'étanchéité et de recouvrement gonflants selon la revendication 1, **caractérisés en ce qu**'on utilise, comme élastomères thermoplastiques, des copolymères éthylène-acide méthacrylique, des copolymères butadiène-acide acrylique, des polybutadiènes sulfonés ou des caoutchoucs EPDM sulfonés, des copolymères en bloc styrène-butadiène-styrène, des copolymères styrènebutadiène, des copolymères polyester-polyéther, des copolymères en bloc EPDM-caoutchouc réticulé avec du propylène ou des copolymères en bloc polyéther-polyamide.

3. Profilés d'étanchéité et de recouvrement gonflants selon la revendication 1, **caractérisés en ce qu**'on utilise comme inhibiteur de flammes un ester de l'acide phosphorique, du triphényle et du phosphate de résorcine-diphényle.

4. Profilés d'étanchéité et de recouvrement gonflants selon la revendication 1, **caractérisés en ce qu**'on utilise, comme charges minérales, du trihydrate d'aluminium, du plâtre, de l'argile, des silicates, du talc, de la craie, du dioxyde de titane, du carbonate de magnésium, de l'hydroxyde de magnésium, du mica, de la vermiculite, de la poudre de quartz, de l'oxyde de zinc.

5. Profilés d'étanchéité et de recouvrement gonflants selon la revendication 1, **caractérisés en ce qu**'on utilise comme fibres minérales, des fibres de verre, de phosphate de calcium ou de basalte.

6. Profilés d'étanchéité et de recouvrement gonflants selon la revendication 1, **caractérisés en ce que** les profilés contiennent des additifs supplémentaires, tels que des pigments.

7. Utilisation de profilés d'étanchéité et de recouvrement gonflants selon la revendication 1, aussi bien en tant que dispositifs d'étanchéité aussi bien vis-à-vis de gaz froids que de gaz chauds.
